# FASCICULE DE BREVET EUROPEEN

(11) **EP 4 320 336 B1**
(45) Date de publication et mention de la délivrance du brevet: **15.01.2025**
(21) Numéro de dépôt: 22717598.1
(22) Date de dépôt: 24.03.2022
(51) Int. Cl.: F01D 5/14, F01D 9/04, F04D 29/54

(54) **GROUPE D'AUBES STATORIQUES**
STATORSCHAUFELGRUPPE
STATOR VANES GROUP

(30) Priorité: 06.04.2021 BE 202105260
(43) Date de publication de la demande: 14.02.2024
(73) Titulaire: Safran Aero Boosters, 4041 Herstal (BE)
(72) Inventeur: BOUR, Théo Robin Thomas, 4041 Herstal (BE); REMY, Christophe Joseph Richard Gillain, 4041 Herstal (BE)
(74) Mandataire: Gevers Patents
(86) Numéro de dépôt international: PCT/EP2022/057768
(87) Numéro de publication internationale: WO 2022/214323

(56) Documents cités:
- EP-A1- 2 921 714
- EP-A1- 2 921 715
- EP-A1- 2 921 716
- EP-A1- 3 018 295
- EP-A2- 3 273 001

## Description

### Domaine technique

Selon un premier aspect, l'invention se rapporte à un groupe d'aubes statoriques pour turbomachine. Selon un deuxième aspect, l'invention se rapporte à une méthode d'assemblage d'un groupe d'aubes statoriques pour turbomachine.

### Etat de la technique

Le document EP2921716A1 concerne un groupe de rangées d'aubes pouvant être disposé dans une voie d'écoulement principale d'une turbomachine et constitué de N rangées d'aubes d'éléments adjacents qui sont fixes les unes par rapport aux autres à la fois dans le sens méridional et dans le sens circonférentiel. Il y a une rangée de pales d'élément avant dotée de pales avant dotées d'un bord d'attaque et d'un bord de fuite et une rangée de pales d'élément arrière dotée de pales arrière dotées d'un bord d'attaque et d'un bord de fuite, et le groupe de rangées de pales présente deux limites de trajet d'écoulement principal. Il est prévu que le profil d'aube des aubes des rangées d'aubes d'éléments soit relié fermement à une base sur au moins l'une des deux limites du trajet d'écoulement principal, avec au moins un profil d'aube d'une aube de l'une des les deux rangées de pales d'éléments faisant saillie au-delà de sa base au moins à proximité de la limite du trajet d'écoulement principal et au moins sur la base d'une pale de l'autre des deux rangées de pales d'éléments.

Le document EP2921715A1 concerne un groupe de rangées d'aubes pouvant être disposées dans une voie d'écoulement principale d'une turbomachine et constitué de N rangées d'aubes d'éléments adjacents qui sont disposées de manière fixe les unes par rapport aux autres à la fois dans la direction axiale et dans la direction circonférentielle. Il y a une rangée de pales d'élément avant avec des pales avant avec bord d'attaque et bord de fuite et une rangée de pales d'élément arrière avec des pales arrière avec bord d'attaque et bord de fuite et le groupe de rangées de pales présente deux limites de trajet d'écoulement principal. Il est prévu que le profil des aubes des rangées d'aubes d'éléments soit relié de manière rigide à une structure de pied d'aube sur au moins l'une des deux limites du chemin d'écoulement principal, la structure de pied d'aube des aubes de la rangée de pales de l'élément avant présente au moins une structure de maintien et/ou la structure de pied de pale des pales de la rangée de pales de l'élément arrière présente au moins une structure de maintien et au moins une des structures de maintien est conçue et adaptée en raison de sa forme, pour fixer la construction de pied d'aube respective de la rangée d'aubes d'élément dans au moins une direction à l'intérieur de la structure environnante de la limite de trajet d'écoulement principal concernée.

Le document EP2921714A1 concerne un groupe de rangées d'aubes pouvant être disposées dans une voie d'écoulement principale d'une turbomachine et constitué de N rangées d'aubes d'éléments adjacents qui sont disposées de manière fixe les unes par rapport aux autres à la fois dans la direction axiale et dans la direction circonférentielle. Il y a une rangée de pales d'élément avant avec des pales avant avec bord d'attaque et bord de fuite et une rangée de pales d'élément arrière avec des pales arrière avec bord d'attaque et bord de fuite et le groupe de rangées de pales présente deux limites de trajet d'écoulement principal. Il est prévu que les pales des rangées de pales d'éléments soient fixées à une limite de trajet d'écoulement principal dans la structure environnante au moyen d'une construction de pied d'aube et que les pales des rangées de pales d'éléments soient chacune solidement reliées à un une base sur l'autre limite de trajet d'écoulement principal, une base avant d'une pale d'une rangée d'aubes d'élément avant et une base arrière adjacente d'une pale d'une rangée d'aubes d'élément arrière faisant partie d'une construction d'enveloppe intégrée dans une cavité.

Dans les turbomachines double-flux, la veine d'écoulement du flux d'air primaire est séparée de celle du flux d'air secondaire par un carter. Ce carter est généralement formé d'au moins deux viroles coaxiales, interne et externe, la virole interne délimitant intérieurement la veine d'écoulement du flux d'air primaire et la virole externe délimitant extérieurement la veine d'écoulement du flux d'air secondaire.

Afin d'améliorer les performances des éléments aubagés et en particulier des compresseurs, leurs parties statoriques peuvent être équipées de tandem d'aubes qui permettent d'offrir de meilleures performances. Un tandem d'aubes dont les aubes sont très rapprochées voire se chevauchant offrent des performances accrues. Néanmoins de tels tandems d'aubes sont souvent difficiles à intégrer sans que cela n'influe sur la dimension des viroles interne et externe délimitant les veines d'écoulement des flux primaire et secondaire.

### Résumé de l'invention

Selon un premier aspect, un des buts de la présente invention est de fournir des aubes statoriques d'un compresseur de turbomachine permettant un volume compact et offrant un assemblage aisé tout en limitant la complexité de la virole externe et la masse du compresseur.

A cet effet, les inventeurs proposent un groupe d'aubes statoriques pour une rangée d'aubes statoriques d'un étage d'un compresseur de turbomachine, comprenant :
- une première aube comprenant :
   ∘ une plateforme de première aube pour coupler mécaniquement ladite première aube avec une virole externe et délimitée par :
      ▪ une surface interne définissant un profil d'une veine pour un écoulement de fluide au travers de ladite rangée d'aubes statoriques,
      ▪ une surface externe,
   ∘ une pale de première aube délimitée par une tête de première aube et un pied de première aube, la pale étant fixée sur la surface interne de plateforme de première aube ;
- une deuxième aube comprenant :
   ∘ une plateforme de deuxième aube pour coupler mécaniquement la deuxième aube avec une virole externe et délimitée par :
      ▪ une surface interne pour entrer en contact avec la surface externe de plateforme de première aube,
      ▪ une surface externe,
   ∘ une pale de deuxième aube délimitée par une tête de deuxième aube et un pied de deuxième aube, la pale de deuxième aube étant fixée sur la surface interne de plateforme de deuxième aube ;
ladite plateforme de première aube comprenant un ajour pour recevoir la deuxième aube.

Le groupe d'aubes statoriques de la présente invention permet de fournir des aubes particulièrement proches, ce qui permet d'améliorer la capacité de déviation de l'aubage statorique sous forte charge aérodynamique. Grâce au groupe d'aubes statoriques de l'invention, une telle amélioration des propriétés aérodynamique ne se fait pas au détriment de la trace circonférentielle de la virole externe de l'étage d'un compresseur.

La présente invention permet, grâce à la plateforme de première aube comprenant un ajour pour recevoir la deuxième aube, de simplifier la fixation, notamment car une seule fixation suffit pour deux aubes. Cela permet un usinage moindre de la virole et de gagner du temps d'assemblage. En effet, grâce à l'ajour dans la plateforme de première aube, la plateforme de deuxième aube vient en butée contre la plateforme de première aube et la tête de deuxième aube est bloquée selon une direction circonférentielle et axiale par l'ajour. Lorsque le groupe d'aube ainsi formé est fixé à la virole externe par le biais de la plateforme de première aube, la plateforme de deuxième vient alors en butée contre la virole externe de sorte que la deuxième aube est bloquée radialement. De préférence, l'ajour possède une géométrie encadrant le profil de la pale de deuxième aube, ce qui permet l'insertion de celle-ci sans difficulté particulière.

Grâce au groupe d'aube de l'invention, il est nécessaire d'assurer seulement la fixation de la première aube, la plateforme de deuxième aube étant alors fixée par l'intermédiaire de la plateforme de première aube. De préférence, la plateforme de première aube est boulonnée, rivetée ou soudée à la virole externe. Ainsi, grâce à l'invention, il n'est pas nécessaire de fixer directement la plateforme de deuxième aube à la virole externe car l'invention permet de la fixer par l'intermédiaire de la plateforme de première aube, ce qui est rendu possible par la présence de l'ajour dans la plateforme de première aube.

La présente invention permet en outre de diminuer la complexité de la virole externe. Globalement, elle permet l'intégration d'aubes tandem présentant des avantages par rapport aux objectifs aérodynamiques, à la masse et à la complexité de montage.

Le groupe d'aubes de la présente invention permet d'assurer la solidité de l'assemblage d'une rangée d'aubes statorique tout en respectant un encombrement axial compatible avec des distances réduites entre étages statoriques et rotoriques.

Un avantage de la présente invention est de permettre une réduction de la masse d'un tandem d'aubes statoriques. Un autre avantage de la présente invention est de permettre grâce au groupe d'aubes statoriques de l'invention, une réduction et de l'encombrement axial en évitant d'avoir à ajouter un double étage rotorique et statorique par un seul stator complémentaire.

De préférence, le pied de première aube est configuré pour être mécaniquement couplé avec une virole interne d'un étage de compresseur. Le pied de deuxième aube est aussi configuré pour être mécaniquement couplé avec la virole interne d'un étage de compresseur.

La pale de première aube étant fixée sur la surface interne de plateforme de première aube signifie que la pale est solidarisée à la plateforme par la surface interne de plateforme. Fixée permet ici de désigner l'endroit où la pale et la plateforme sont liées mécaniquement entres elles mais pas la façon dont elles le sont. Fixée ne signifie pas nécessairement que la pale a été fixée à la plateforme mais cela désigne également le cas où la plateforme et la pale ont été usinées à partir d'un seul bloc ou encore que la plateforme et la pale ont été créés par fabrication additive.

Selon un mode de réalisation préféré, le compresseur de turbomachine est un compresseur axial et la pale de première aube chevauche la pale de deuxième aube axialement. Préférentiellement, le groupe d'aubes statoriques est un tandem chevauché d'aubes statoriques.

De préférence, la pale de première aube chevauche en partie la pale de deuxième aube axialement. Un tel chevauchement axialement permet une amélioration des propriétés aérodynamiques d'un étage de compresseur par rapport à une rangée d'aubes simple et améliore la compacité.

Dans le cadre du présent document, axialement réfère à la direction axiale lorsque le groupe d'aubes statoriques est positionné dans un compresseur axial ; et la direction circonférentielle réfère à la direction de rotation d'une rangée d'aubes rotoriques positionnées dans un tel étage de compresseur de turbomachine.

De préférence, la plateforme de première aube comprend un épaulement délimitant une première portion entourant l'ajour et une deuxième portion. Préférentiellement, la deuxième portion a une plus grande épaisseur que la première portion. De façon encore plus préférée, la différence d'épaisseur entre la première et la deuxième portion est égale à l'épaisseur de la plateforme de deuxième aube.

La surface interne de plateforme de deuxième aube est en contact avec la surface externe de plateforme de première aube et la surface externe de plateforme de deuxième aube est configuré pour entrer en interaction avec une virole externe d'un étage de compresseur.

L'ajour est une ouverture entre la surface interne de plateforme de première aube et la surface externe de plateforme de première aube.

De préférence, l'ouverture est entièrement délimitée par la plateforme de deuxième aube. Entièrement délimité signifie qu'il existe des parois autour de l'ouverture selon une direction axiale et selon une direction circonférentielle. Comme il s'agit d'une ouverture, celle-ci est bien entendu libre selon une direction radiale afin que la pale de deuxième aube puisse être insérée au travers de cette ouverture. Une telle ouverture permet grâce aux parois latérales un bon maintien de la deuxième aube selon les directions axiales et circonférentielle. Grâce à ces parois, seul un maintien de la deuxième aube par rapport à la première aube selon une direction radiale est nécessaire. Par exemple, l'ajour est un trou entre la surface interne et la surface externe de plateforme de première aube. Par exemple, l'ajour, l'ouverture ou le trou est débouchant seulement entre la surface interne et la surface externe de plateforme de première aube.

Selon un premier mode de réalisation, la première aube est formée d'une seule pièce, de façon préférée la première aube est monobloc. Par exemple, la première aube est usinée à partir d'un seul bloc. Par exemple la première aube est fabriquée par fabrication additive. De préférence, la deuxième aube est formée d'une seule pièce, de façon préférée la deuxième aube est monobloc. Par exemple, la deuxième aube est usinée à partir d'un seul bloc. Par exemple la deuxième aube est fabriquée par fabrication additive.

Selon un deuxième mode de réalisation, la pale de première aube est rapportée à la plateforme de première aube. De préférence, la pale de deuxième aube est rapportée à la plateforme de deuxième aube. Par exemple la pale est soudée à la plateforme (s'applique à la première et/ou à la deuxième aube).

De préférence, la surface externe de plateforme de première aube comprend une baignoire autour de l'ajour. La baignoire autour de l'ajour est configurée pour qu'un bourrelet de soudure ou d'usinage entre la pale et la plateforme de deuxième aube n'entre pas en contact avec la surface externe de plateforme de première aube.

De préférence, le couplage mécanique de la deuxième aube sur la première aube peut se faire à l'aide de centrages et d'appuis présents sur la virole externe.

De préférence, le groupe d'aubes statoriques comprend en outre un joint souple entre la tête de deuxième aube et la surface interne de plateforme de première aube. Par exemple, le joint souple est de type silicone. Selon un autre mode de réalisation, le groupe d'aubes statoriques comprend en outre un joint souple entre la pale de deuxième aube et la surface interne de plateforme de première aube. Pour tous les modes de réalisation, un tel joint souple permet de garantir une veine entre les aubages (première et deuxième aubes) la plus lisse possible. Cela permet de préférence de créer un rayon de raccordement entre la deuxième aube et la surface interne de la plateforme ajourée de première aube de sorte à améliorer les propriétés aérodynamique de la veine.

Les inventeurs proposent également une rangée d'aubes statoriques de turbomachine comprenant :
- une virole externe,
- une pluralité de groupes d'aubes statoriques selon l'un des modes de réalisation de groupe d'aubes statoriques décrit précédemment,
ladite pluralité de groupes d'aubes statoriques étant fixée à la virole externe par l'intermédiaire de la plateforme de première aube.

La rangée d'aubes statoriques comprend en outre, préférentiellement, une virole interne couplée mécaniquement aux pieds desdites premières et deuxièmes aubes statoriques de ladite pluralité de groupes d'aubes statoriques.

De préférence, la virole externe comprend au moins une rainure configurée pour recevoir au moins un groupe d'aubes statoriques de la pluralité d'aubes statoriques. Selon un autre mode de réalisation, la virole externe comprend une pluralité de rainures, chacune des rainures étant configurée pour recevoir un groupe d'aubes statoriques de la pluralité d'aubes statoriques.

Selon un autre mode de réalisation, il est envisagé de tourner la virole externe sur l'ensemble de sa circonférence afin de créer une « rainure » capable d'accueillir une pluralité de groupes d'aubes de l'invention. Avec un tel mode de réalisation, l'orientation des deuxièmes aubes pourrait être définie par l'orientation des faces latérales des premières aubes. Les faces latérales s'étendant entre les surfaces interne et externe de plateforme d'aube et étant destinées à être mise en contact avec une plateforme de groupe d'aube adjacente dans ladite « rainure ».

Les inventeurs proposent également un compresseur de turbomachine comprenant une rangée d'aubes statoriques selon l'un des modes de réalisation décrit précédemment. L'invention est particulièrement adaptée à un compresseur de turbomachine rapide, notamment de type comprenant un réducteur.

Les inventeurs proposent également une turbomachine d'aéronef comprenant un compresseur de turbomachine tel que décrit précédemment.

Selon un deuxième aspect de l'invention, les inventeurs proposent une méthode d'assemblage d'un groupe d'aubes statoriques pour une rangée d'aubes statoriques d'un étage de compresseur de turbomachine comprenant les étapes suivantes :
a. fournir une première aube comprenant :
   ∘ une plateforme de première aube pour coupler mécaniquement avec une virole externe et délimitée par :
      ▪ une surface interne définissant un profil d'une veine pour un écoulement de fluide au travers de ladite rangée d'aubes statoriques,
      ▪ une surface externe,
   ∘ une pale de première aube délimitée par une tête de première aube et un pied de première aube, ladite pale étant fixée sur ladite surface interne de plateforme de première aube ;
   ladite plateforme de première aube comprenant un ajour ;
b. fournir une deuxième aube comprenant :
   ∘ une plateforme de deuxième aube pour coupler mécaniquement la deuxième aube avec une virole externe et délimitée par
      ▪ une surface interne pour entrer en contact avec la surface externe de plateforme de première aube,
      ▪ une surface externe,
   ∘ une pale de deuxième aube délimitée par une tête de deuxième aube et un pied de deuxième aube, la pale de deuxième aube étant fixée sur la surface interne de plateforme de deuxième aube ;
c. insérer la deuxième aube dans l'ajour en commençant par le pied de deuxième aube jusqu'à mettre la surface interne de plateforme de deuxième aube en butée sur la surface externe de plateforme de première aube.

Les variantes et avantages du groupe d'aubes statoriques selon le premier aspect de l'invention s'appliquent à la méthode d'assemblage d'un groupe d'aubes statoriques selon le deuxième aspect de l'invention, *mutatis mutandis.*

Les inventeurs proposent également, une méthode d'assemblage d'une rangée d'aubes statoriques d'un étage de compresseur de turbomachine comprenant les étapes suivantes :
d. fournir un groupe d'aubes statoriques selon le premier ou le deuxième aspect de l'invention, le groupe d'aubes statoriques comprenant des moyens de fixation solidarisés à la surface externe de plateforme de première aube ;
e. fournir une virole externe d'un étage de compresseur, la virole externe comprenant un trou de fixation ;
f. fixer le groupe d'aubes statoriques à la virole externe en faisant passer les moyens de fixation au travers du trou de fixation puis en boulonnant, rivetant ou soudant les moyens de fixation à la virole externe de sorte que la surface externe de plateforme de première aube et la surface externe de plateforme de deuxième aube soient en contact avec la virole externe.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre un mode de réalisation d'un groupe d'aubes selon l'invention ;
- la Fig.2 montre un mode de réalisation d'un groupe d'aubes selon l'invention positionné entre une virole interne et une virole externe ;
- la Fig.3 montre une vue rapprochée d'une plateforme de première aube ;
- la Fig.4 montre une vue rapprochée d'une plateforme de deuxième aube.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

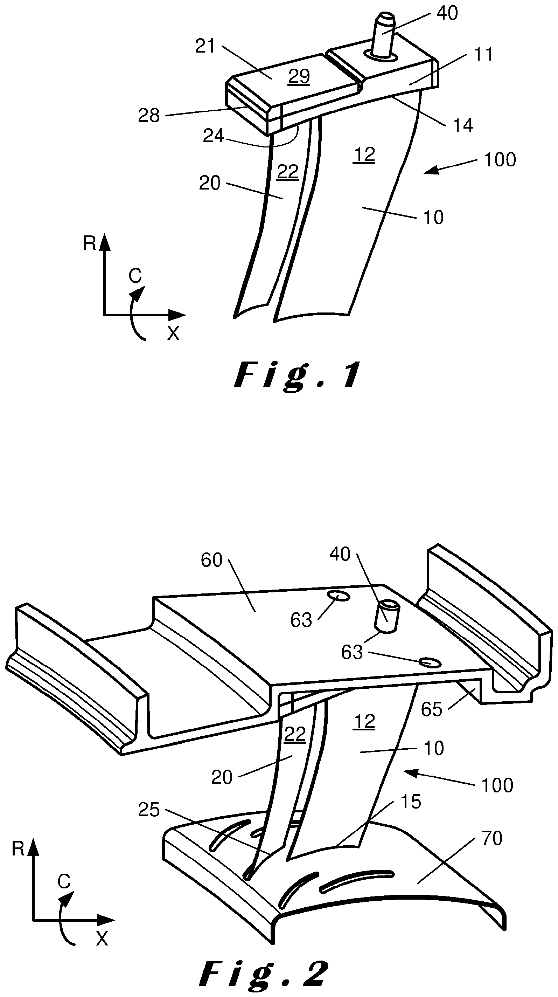

Les figures 1 à 4 montrent un repère géométrique abstrait afin de quantifier et/ou visualiser des propriétés de modes de réalisation de l'invention. La référence X désigne, par exemple, généralement l'« axe moteur » de la turbomachine d'aéronef. Les étages des compresseurs et des turbines de la turbomachine d'aéronef sont généralement empilés essentiellement le long de cet axe moteur. Le repère de la figure 1, montre les directions « axiale » X, « circonférentielle » C et « radiale » R correspondant préférentiellement et respectivement en des directions parallèle à l'axe moteur, essentiellement circulaire autour de l'axe moteur, et direction perpendiculaire à l'axe moteur. Les termes « axialement » et « radialement » sont dérivés respectivement des termes « axial » et « radial » avec une signification préférée analogue. Les termes « circonférentielle » et « radiale » font de préférence référence à un système de coordonnées polaires connu d'un homme du métier dans chaque plan perpendiculaire à l'axe moteur.

La figure 1 montre un exemple de mode de réalisation d'un groupe d'aubes 100 selon l'invention. Le groupe d'aubes 100 de la figure 1 comprend une première aube 10 comprenant une plateforme 11 de première aube délimitée par une surface interne 18 définissant un profil d'une veine pour un écoulement de fluide au travers d'une rangée d'aubes statoriques d'un étage d'un compresseur de turbomachine axiale. La plateforme 11 de première aube permet le couplage mécanique avec une virole externe 60 et est en outre délimitée par une surface externe 19. La première aube comprend une pale 12 de première aube délimitée par une tête 14 de première aube fixée sur ladite surface interne 18 de plateforme 11 de première aube et un pied 15 de première aube. Le pied 15 de première aube est configuré pour entrer en interaction avec une virole interne 70 de la rangée d'aubes statoriques. La plateforme 11 de première aube peut être rapportée après que la première aube 10 a été usinée.

Le groupe d'aubes 100 de la figure 1 montre aussi une deuxième aube 20 comprenant une plateforme 21 de deuxième aube permet le couplage mécanique avec une virole externe 60. La plateforme 21 de deuxième aube est délimitée par une surface interne 28 pour entrer en contact avec la surface externe 19 de plateforme 11 de première aube et une surface externe 29. La deuxième aube comprend une pale 22 de deuxième aube délimitée par une tête 24 de deuxième aube et un pied 25 de deuxième aube. La pale 22 de deuxième aube étant fixée sur la surface interne 28 de plateforme 21 de deuxième aube. La plateforme 11 de première aube comprend un ajour 30 (non représenté) pour recevoir la tête de deuxième aube 24, de sorte à mettre en contact la surface externe 19 de première aube avec ladite surface interne 28 de deuxième aube. Grâce à l'ajour 30 (non représenté), les pales de première 12 et deuxième 22 aubes sont particulièrement rapprochées.

La première aube 10 peut être en aval ou en amont de la deuxième aube 20.

La figure 2 montre un exemple de mode de réalisation d'un groupe d'aubes 100 selon l'invention positionné entre une virole externe 60 et une virole interne 70. La virole externe 60 comprend une rainure 65 circonférentielle pour recevoir les plateformes 11, 21 du groupe d'aubes 100. La virole externe 60 comprend un trou de fixation 63 pour laisser passer des moyens de fixation 40 solidaires de la plateforme de première aube 11. Le groupe d'aubes 100 est ici fixé à la virole externe 60 d'un étage d'un compresseur de turbomachine grâce aux moyens de fixation 40 qui permettent par exemple de boulonner le groupe d'aube 100 à la virole externe 60. Le groupe d'aube statoriques 100 montré en figure 2 est un tandem chevauché d'aubes. Celui-ci peut être fixé à la virole externe 60 par un seul moyen de fixation 40. Lorsque les première 10 et deuxième 20 aubes sont fixées à la virole externe 60, un joint souple (non représenté), par exemple de type silicone, est appliqué entre la tête de deuxième aube 24 et la surface interne 18 de plateforme de première aube. Un tel joint souple permet de combler une éventuel espace entre la pale 22 de deuxième aube (ou la tête 24 de pale de deuxième aube) et les parois latérales de l'ajour 30.

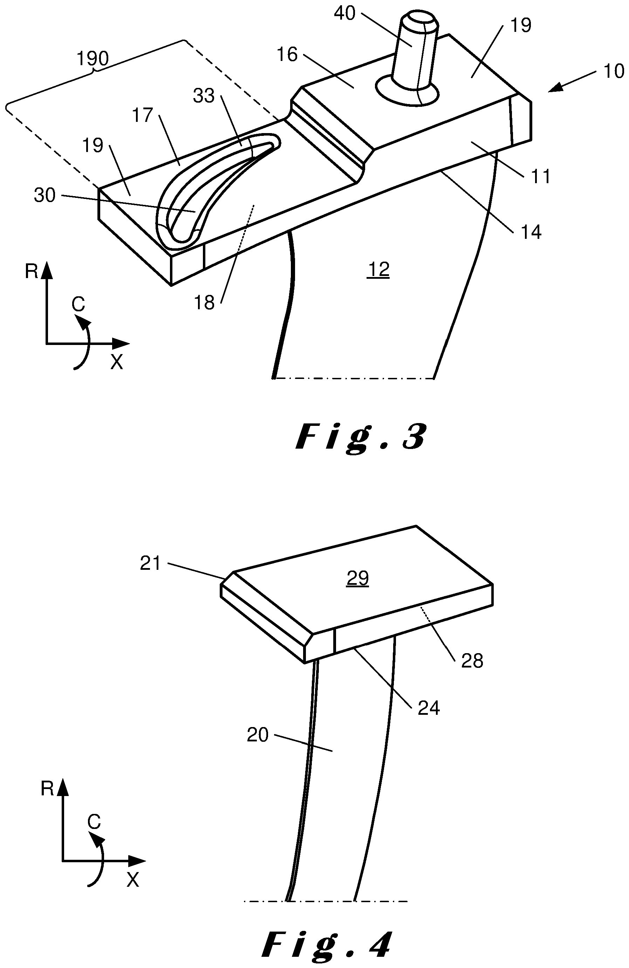

Le groupe d'aubes 100 est ici fixé à la virole externe 60 d'une rangée d'aubes statoriques d'un compresseur de turbomachine avec des moyens de fixation 40.Les moyens de fixation 40 sont insérés dans un trou de fixation 63 de la virole externe 60. Par exemple les moyens de fixation 40 permettent de boulonner, riveter, ou souder, la première aube 10 à la virole externe 60, ce qui permet de maintenir la surface externe 19 de plateforme de première aube 11 et la surface externe 29 de plateforme de deuxième aube 21 contre la virole externe 60. Grâce à l'épaulement 190 (montré en figure 3) de la plateforme de première aube 11, la surface externe 29 de plateforme de deuxième aube 21 vient affleurer la surface externe 19 de plateforme de première aube. Un tel affleurement, permet d'avoir un bon contact entre les surfaces externe 19, 29 des plateformes de première 11 et deuxième 21 aubes respectivement avec la virole externe 60. Un tel contact permet d'avoir un assemblage de groupe d'aube statorique 100 bien rigide avec la virole externe 60.

La figure 3 montre un exemple de mode de réalisation de la première aube 10. Comme décrit en figure 1 la première aube 10 comprend une plateforme 11 de première aube comprenant un ajour 30 pour recevoir la tête d'une deuxième aube 24, la surface externe 19 de première aube étant alors en contact avec ladite surface interne 28 de deuxième aube. La plateforme 11 de première aube comprend un épaulement 190 définissant une première portion 17 entourant ledit ajour 30. La plateforme 21 de première aube définit aussi une deuxième portion 16 ayant une plus grande épaisseur que la première portion 17. La surface externe 19 de la plateforme 11 de première aube désigne à la fois la surface externe de la première portion 17 et de la deuxième portion 16. Des moyens de fixation 40 sont positionnés sur la surface externe 19 de la deuxième portion de plateforme de première aube. Ces moyens de fixation 40 permettent de fixer la première aube 10 à une virole externe 60 d'un étage de compresseur.

L'ajour 30 est une ouverture entre la surface interne 28 de plateforme de première aube et la surface externe 29 de plateforme de première aube. L'ajour 30 ou l'ouverture est entièrement délimitée axialement et selon une direction circonférentielle C par ladite plateforme 21 de deuxième aube. Axialement signifie, lorsque le groupement d'aubes est fixé dans un étage statorique de compresseur axial, la direction définie par l'axe du compresseur axial. En figure 3, l'ajour 30 est un trou entre la surface interne 18 et la surface externe 19 de plateforme de première aube. L'ajour 30, l'ouverture ou le trou est débouchant seulement entre la surface interne 18 et la surface externe 19 de plateforme de première aube. Un tel trou est par exemple réalisé par fraisage. La surface externe 19 de plateforme de première aube 11 comprend une baignoire 33 autour de l'ajour 30.

La figure 4 montre un exemple de mode de réalisation de la deuxième aube 20. Comme décrit en figure 1, la deuxième aube 20 comprend une plateforme 21 délimitée par une surface interne 28 pour entrer en contact avec la surface externe 19 de plateforme 11 de première aube et une surface externe 29. La deuxième aube 20 comprend en outre une pale 22 de deuxième aube délimitée par une tête 24 de deuxième aube et un pied 25 de deuxième aube, la pale 22 de deuxième aube étant fixée sur la surface interne 28 de plateforme 21 de deuxième aube. Le pied 25 de deuxième aube (non représenté) est configuré pour entrer en interaction avec la virole interne 70 d'une rangée d'aubes statoriques.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Groupe d'aubes statoriques 100 pour une rangée d'aubes statoriques d'un étage d'un compresseur de turbomachine, les aubes du groupe d'aubes statoriques 100 étant rapprochées et offrant un assemblage aisé. Le groupe d'aubes statoriques 100 comprenant une plateforme 11 de première aube 10 comprenant un ajour 30 pour recevoir la tête 24 de deuxième aube 20, la surface externe 19 de plateforme 11 de première aube étant en contact avec la surface interne 28 de plateforme 21 de deuxième aube.

## Revendications

1. Groupe d'aubes statoriques (100) pour une rangée d'aubes statoriques d'un étage d'un compresseur de turbomachine, comprenant :
- une première aube (10) comprenant :
∘ une plateforme (11) de première aube pour coupler mécaniquement ladite première aube (10) avec une virole externe (60) et délimitée par :
▪ une surface interne (18) définissant un profil d'une veine pour un écoulement de fluide au travers de ladite rangée d'aubes statoriques,
▪ une surface externe (19),
∘ une pale (12) de première aube délimitée par une tête (14) de première aube et un pied (15) de première aube, ladite pale (12) étant fixée sur ladite surface interne (18) de plateforme (11) de première aube ;
- une deuxième aube (20) comprenant :
∘ une plateforme (21) de deuxième aube pour coupler mécaniquement ladite deuxième aube (20) avec une virole externe (60) et délimitée par :
▪ une surface interne (28) pour entrer en contact avec la surface externe (19) de plateforme (11) de première aube,
▪ une surface externe (29),
∘ une pale (22) de deuxième aube délimitée par une tête (24) de deuxième aube et un pied (25) de deuxième aube, ladite pale (22) de deuxième aube étant fixée sur ladite surface interne (28) de plateforme (21) de deuxième aube ;
ladite plateforme (11) de première aube comprenant un ajour (30) pour recevoir ladite deuxième aube (20) ;
**caractérisé en ce que** l'ajour (30) est une ouverture entre ladite surface interne (18) de plateforme de première aube et ladite surface externe (19) de plateforme de première aube.

2. Groupe d'aubes statoriques (100) selon la revendication précédente, **caractérisé en ce que** ledit compresseur de turbomachine est un compresseur axial et **en ce que** ladite pale (12) de première aube chevauche ladite pale (22) de deuxième aube axialement, de préférence, ledit groupe d'aubes statoriques (100) est un tandem chevauché d'aubes statoriques.

3. Groupe d'aubes statoriques (100) selon l'une quelconque des revendications précédentes, **caractérisé en ce que** ladite plateforme (21) de première aube comprend un épaulement (190) délimitant une première portion (17) entourant ledit ajour (30) et une deuxième portion (16).

4. Groupe d'aubes statoriques (100) selon l'une quelconque des revendications précédentes, **caractérisé en ce que** ladite ouverture est entièrement délimitée par ladite plateforme (21) de deuxième aube.

5. Groupe d'aubes statoriques (100) selon l'une quelconque des revendications précédentes, **caractérisé en ce que** ladite première aube (10) est formée d'une seule pièce, de préférence ladite première aube (10) est monobloc.

6. Groupe d'aubes statoriques (100) selon l'une quelconque des revendications 1 à 4, **caractérisé en ce que** ladite pale (12) de première aube est rapportée à ladite plateforme (11) de première aube.

7. Groupe d'aubes statoriques (100) selon l'une quelconque des revendications précédentes, **caractérisé en ce que** ladite surface externe (19) de plateforme de première aube (11) comprend une baignoire (33) autour dudit ajour (30).

8. Groupe d'aubes statoriques (100) selon l'une quelconque des revendications précédentes, **caractérisé en ce qu'**il comprend en outre un joint souple entre ladite tête de deuxième aube (24) et ladite surface interne (18) de plateforme de première aube.

9. Rangée statoriques de turbomachine comprenant :
- une virole externe (60),
- une pluralité de groupes d'aubes statoriques (100) selon l'une quelconque des revendications précédentes,
ladite pluralité de groupes d'aubes statoriques (100) étant fixée à ladite virole externe (60) par l'intermédiaire de ladite plateforme (21) de première aube.

10. Rangée d'aubes statoriques selon la revendication précédente, comprenant en outre une virole interne (70) couplée mécaniquement aux pieds desdites premières (15) et deuxièmes aubes (25) statoriques de ladite pluralité de groupes d'aubes statoriques (100).

11. Rangée d'aubes statoriques selon la revendication 9 ou 10, **caractérisé en ce que** ladite virole externe (60) comprend au moins une rainure (65) configurée pour recevoir au moins un groupe d'aubes statoriques (100) de ladite pluralité de groupes d'aubes statoriques.

12. Compresseur de turbomachine comprenant une rangée d'aubes statoriques selon l'une quelconque des revendications 9 à 11.

13. Turbomachine d'aéronef comprenant un compresseur de turbomachine selon la revendication précédente.

14. Méthode d'assemblage d'un groupe d'aubes statoriques (100) pour une rangée d'aubes statoriques d'un étage de compresseur de turbomachine comprenant les étapes suivantes :
a. fournir une première aube (10) comprenant :
∘ une plateforme (11) de première aube pour coupler mécaniquement avec une virole externe (60) et délimitée par :
▪ une surface interne (18) définissant un profil d'une veine pour un écoulement de fluide au travers de ladite rangée d'aubes statoriques,
▪ une surface externe (19),
∘ une pale (12) de première aube délimitée par une tête (14) de première aube et un pied (15) de première aube, ladite pale (12) étant fixée sur ladite surface interne (18) de plateforme (11) de première aube ;
ladite plateforme (11) de première aube comprenant un ajour (30) ;
b. fournir une deuxième aube (20) comprenant :
∘ une plateforme (21) de deuxième aube pour coupler mécaniquement ladite deuxième aube (20) avec une virole externe (60) et délimitée par
▪ une surface interne (28) pour entrer en contact avec la surface externe (19) de plateforme (11) de première aube,
▪ une surface externe (29),
∘ une pale (22) de deuxième aube délimitée par une tête (24) de deuxième aube et un pied (25) de deuxième aube, ladite pale (22) de deuxième aube étant fixée sur ladite surface interne (28) de plateforme (21) de deuxième aube ;
**caractérisée en ce que** l'ajour (30) est une ouverture entre ladite surface interne (18) de plateforme de première aube et ladite surface externe (19) de plateforme de première aube ;
et **en ce que** la méthode comprend l'étape de :
c. insérer ladite deuxième aube (20) dans ledit ajour (30) en commençant par ledit pied (25) de deuxième aube jusqu'à mettre ladite surface interne (28) de plateforme de deuxième aube en butée sur ladite surface externe (19) de plateforme de première aube.

15. Méthode d'assemblage d'une rangée d'aubes statoriques d'un étage de compresseur de turbomachine comprenant les étapes suivantes :
d. réaliser les étapes de la revendication précédente de façon à assembler un groupe d'aubes statoriques (100), ledit groupe d'aubes statoriques (100) comprenant des moyens de fixation (40) solidarisés à ladite surface externe (19) de plateforme (11) de première aube (10) ;
e. fournir une virole externe (60) d'un étage de compresseur, ladite virole externe (60) comprenant un trou de fixation (63) ;
f. fixer ledit groupe d'aubes statoriques (100) à ladite virole externe (60) en faisant passer lesdits moyens de fixation (40) au travers dudit trou de fixation (63) puis en boulonnant, rivetant ou soudant lesdits moyens de fixation (40) à ladite virole externe (60) de sorte que ladite surface externe (19) de plateforme (11) de première aube (10) et ladite surface externe (29) de plateforme (21) de deuxième aube (20) soient en contact avec ladite virole externe (60).

## Patentansprüche

1. Statorschaufelgruppe (100) für eine Statorschaufelreihe einer Stufe eines Kompressors eines Turbotriebwerks, umfassend:
- eine erste Schaufel (10), umfassend:
- eine Plattform (11) der ersten Schaufel, um die erste Schaufel (10) mechanisch mit einem Außenring (60) zu koppeln, und begrenzt durch:
- eine Innenfläche (18), die ein Profil einer Ader für einen Abfluss von Fluid durch die Statorschaufelreihe hindurch definiert,
- eine Außenfläche (19),
- ein Blatt (12) der ersten Schaufel, das durch einen Kopf (14) der ersten Schaufel und einen Fuß (15) der ersten Schaufel begrenzt wird, wobei das Blatt (12) an der Innenfläche (18) der Plattform (11) der ersten Schaufel befestigt ist;
- eine zweite Schaufel (20), umfassend
- eine Plattform (21) der zweiten Schaufel, um die zweite Schaufel (20) mechanisch mit einem Außenring (60) zu koppeln, und begrenzt durch:
- eine Innenfläche (28), um mit der Außenfläche (19) der Plattform (11) der ersten Schaufel in Kontakt zu treten,
- eine Außenfläche (29),
- ein Blatt (22) der zweiten Schaufel, das durch einen Kopf (24) der zweiten Schaufel und einen Fuß (25) der zweiten Schaufel begrenzt wird, wobei das Blatt (22) der zweiten Schaufel an der Innenfläche (28) der Plattform (21) der zweiten Schaufel befestigt ist;
wobei die Plattform (11) der ersten Schaufel einen Durchbruch (30) umfasst, um die zweite Schaufel (20) aufzunehmen;
**dadurch gekennzeichnet, dass** der Durchbruch (30) eine Öffnung zwischen der Innenfläche (18) der Plattform der ersten Schaufel und der Außenfläche (19) der Plattform der ersten Schaufel ist.

2. Statorschaufelgruppe (100) nach dem vorstehenden Anspruch, **dadurch gekennzeichnet, dass** der Kompressor des Turbotriebwerks ein axialer Kompressor ist und dadurch, dass das Blatt (12) der ersten Schaufel das Blatt (22) der zweiten Schaufel axial überlappt, wobei die Statorschaufelgruppe (100) vorzugsweise ein überlapptes Tandem von Statorschaufeln ist.

3. Statorschaufelgruppe (100) nach einem der vorstehenden Ansprüche, **dadurch gekennzeichnet, dass** die Plattform (21) der ersten Schaufel eine Schulter (190) umfasst, die einen ersten Abschnitt (17), der den Durchbruch (30) umgibt, und einen zweiten Abschnitt (16) begrenzt.

4. Statorschaufelgruppe (100) nach einem der vorstehenden Ansprüche, **dadurch gekennzeichnet, dass** die Öffnung vollständig von der Plattform (21) der zweiten Schaufel begrenzt wird.

5. Statorschaufelgruppe (100) nach einem der vorstehenden Ansprüche, **dadurch gekennzeichnet, dass** die erste Schaufel (10) einstückig gebildet ist, vorzugsweise ist die erste Schaufel (10) im Block gegossen.

6. Statorschaufelgruppe (100) nach einem der Ansprüche 1 bis 4, **dadurch gekennzeichnet, dass** das Blatt (12) der ersten Schaufel an der Plattform (11) der ersten Schaufel angestückt ist.

7. Statorschaufelgruppe (100) nach einem der vorstehenden Ansprüche, **dadurch gekennzeichnet, dass** die Außenfläche (19) der Plattform (11) der ersten Schaufel eine Wanne (33) um den Durchbruch (30) herum umfasst.

8. Statorschaufelgruppe (100) nach einem der vorstehenden Ansprüche, **dadurch gekennzeichnet, dass** sie weiter eine nachgiebige Verbindung zwischen dem Kopf der zweiten Schaufel (24) und der Innenfläche (18) der Plattform der ersten Schaufel umfasst.

9. Statorreihe für ein Turbotriebwerk, umfassend:
- einen Außenring (60),
- eine Vielzahl von Statorschaufelgruppen (100) nach einem der vorstehenden Ansprüche,
wobei die Vielzahl von Statorschaufelgruppen (100) mithilfe der Plattform (21) der ersten Schaufel am Außenring (60) befestigt ist.

10. Statorschaufelreihe nach dem vorstehenden Anspruch, die weiter einen Innenring (70) umfasst, der mechanisch mit den Füßen der ersten (15) und der zweiten Statorschaufeln (25) der Vielzahl von Statorschaufelgruppen (100) gekoppelt ist.

11. Statorschaufelreihe nach Anspruch 9 oder 10, **dadurch gekennzeichnet, dass** der Außenring (60) mindestens eine Nut (65) umfasst, die konfiguriert ist, um mindestens eine Statorschaufelgruppe (100) der Vielzahl von Statorschaufelgruppen aufzunehmen.

12. Kompressor für ein Turbotriebwerk, umfassend eine Statorschaufelreihe nach einem der Ansprüche 9 bis 11.

13. Turbotriebwerk für ein Luftfahrzeug, umfassend einen Kompressor für ein Turbotriebwerk nach dem vorstehenden Anspruch.

14. Verfahren zum Zusammenbau einer Statorschaufelgruppe (100) für eine Statorschaufelreihe einer Kompressorstufe eines Turbotriebwerks, umfassend die folgenden Schritte:
- Bereitstellen einer ersten Schaufel (10), umfassend:
- eine Plattform (11) der ersten Schaufel, um mechanisch mit einem Außenring (60) gekoppelt zu werden, und begrenzt durch:
- eine Innenfläche (18), die ein Profil einer Ader für einen Abfluss von Fluid durch die Statorschaufelreihe hindurch definiert,
- eine Außenfläche (19),
- ein Blatt (12) der ersten Schaufel, das durch einen Kopf (14) der ersten Schaufel und einen Fuß (15) der ersten Schaufel begrenzt wird, wobei das Blatt (12) an der Innenfläche (18) der Plattform (11) der ersten Schaufel befestigt ist;
wobei die Plattform (11) der ersten Schaufel einen Durchbruch (30) umfasst;
- Bereitstellen einer zweiten Schaufel (20), umfassend:
- eine Plattform (21) der zweiten Schaufel, um die zweite Schaufel (20) mechanisch mit einem Außenring (60) zu koppeln, und begrenzt durch:
- eine Innenfläche (28), um mit der Außenfläche (19) der Plattform (11) der ersten Schaufel in Kontakt zu treten,
- eine Außenfläche (29),
- ein Blatt (22) der zweiten Schaufel, das durch einen Kopf (24) der zweiten Schaufel und einen Fuß (25) der zweiten Schaufel begrenzt wird, wobei das Blatt (22) der zweiten Schaufel an der Innenfläche (28) der Plattform (21) der zweiten Schaufel befestigt ist;
**dadurch gekennzeichnet, dass** der Durchbruch (30) eine Öffnung zwischen der Innenfläche (18) der Plattform der ersten Schaufel und der Außenfläche (19) der Plattform der ersten Schaufel ist;
und dass das Verfahren den folgenden Schritt umfasst:
c. Einführen der zweiten Schaufel (20) in den Durchbruch (30), indem mit dem Fuß (25) der zweiten Schaufel begonnen wird, bis die Innenfläche (28) der Plattform der zweiten Schaufel an der Außenfläche (19) der Plattform der ersten Schaufel zum Anschlag gebracht wird.

15. Verfahren zum Zusammenbau einer Statorschaufelreihe einer Kompressorstufe eines Turbotriebwerks, umfassend die folgenden Schritte:
d. Durchführen der Schritte des vorstehenden Anspruchs derart, dass eine Statorschaufelgruppe (100) zusammengebaut wird, wobei die Statorschaufelgruppe (100) Befestigungsmittel (40) umfasst, die fest mit der Außenfläche (19) der Plattform (11) der ersten Schaufel (10) befestigt sind;
e. Bereitstellen eines Außenrings (60) einer Kompressorstufe, wobei der Außenring (60) ein Befestigungsloch (63) umfasst;
f. Befestigen der Statorschaufelgruppe (100) an den Außenring (60), indem die Befestigungsmittel (40) durch das Befestigungsloch (63) hindurchgeführt werden, dann verbolzen, vernieten oder verlöten der Befestigungsmittel (40) an den Außenring (60) derart, dass die Außenfläche (19) der Plattform (11) der ersten Schaufel (10) und die Außenfläche (29) der Plattform (21) der zweiten Schaufel (20) mit dem Außenring (60) in Kontakt stehen.

## Claims

1. Group of stator vanes (100) for a row of stator vanes of a stage of a turbomachine compressor, comprising:
- a first vane (10) comprising:
- a platform (11) of a first vane for mechanically coupling said first vane (10) with an external shell (60) and delimited by:
- an internal surface (18) defining a profile of a duct for a flow of fluid through said row of stator vanes,
- an external surface (19),
- a blade (12) of the first vane delimited by a head (14) of the first vane and a root (15) of the first vane, said blade (12) being fixed on said internal surface (18) of the platform (11) of the first vane;
- a second vane (20) comprising:
- a platform (21) of a second vane for mechanically coupling said second vane (10) with an external shell (60) and delimited by:
- an internal surface (28) to come into contact with the external surface (19) of the platform (11) of the first vane,
- an external surface (29),
- a blade (22) of the second vane delimited by a head (24) of the second vane and a root (25) of the second vane, said blade (22) of the second vane being fixed on said internal surface (28) of the platform (21) of the second vane;
said platform (11) of the first vane comprising an aperture (30) for accommodating said second vane (20);
**characterised in that** the aperture (30) is an opening between said internal surface (18) of the platform of the first vane and said external surface (19) of the platform of the first vane.

2. Group of stator vanes (100) according to the preceding claim, **characterised in that** said turbomachine compressor is an axial compressor and **in that** said blade (12) of the first vane overlaps said blade (22) of the second vane axially, preferably, said group of stator vanes (100) is an overlapped tandem of stator vanes.

3. Group of stator vanes (100) according to any one of the preceding claims, **characterised in that** said platform (21) of the first vane comprises a shoulder (190) delimiting a first portion (17) surrounding said aperture (30) and a second portion (16).

4. Group of stator vanes (100) according to any one of the preceding claims, **characterised in that** said opening is fully delimited by said platform (21) of the second vane.

5. Group of stator vanes (100) according to any one of the preceding claims, **characterised in that** said first vane (10) is formed of one single part, preferably said first vane (10) is made of one piece.

6. Group of stator vanes (100) according to any one of claims 1 to 4, **characterised in that** said blade (12) of the first vane is added to said platform (11) of the first vane.

7. Group of stator vanes (100) according to any one of the preceding claims, **characterised in that** said external surface (19) of the platform (11) of the first vane comprises a tub (33) around said aperture (30).

8. Group of stator vanes (100) according to any one of the preceding claims, **characterised in that** it further comprises a flexible seal between said head of the second vane (24) and said internal surface (18) of the platform of the first vane.

9. Turbomachine stator row comprising:
- an external shell (60),
- a plurality of groups of stator vanes (100) according to any one of the preceding claims,
said plurality of groups of stator vanes (100) being fixed to said external shell (60) through said platform (21) of the first vane.

10. Row of stator vanes according to the preceding claim, further comprising an internal shell (70) mechanically coupled to the roots of said first (15) and second (25) stator vanes of said plurality of groups of stator vanes (100).

11. Row of stator vanes according to claim 9 or 10, **characterised in that** said external shell (60) comprises at least one groove (65) configured to receive at least one group of stator vanes (100) of said plurality of groups of stator vanes.

12. Turbomachine compressor comprising a row of stator vanes according to any one of claims 9 to 11.

13. Aircraft turbomachine comprising a turbomachine compressor according to the preceding claim.

14. Method for assembling a group of stator vanes (100) for a row of stator vanes of a stage of a turbomachine compressor, comprising the following steps:
a. providing a first vane (10) comprising:
- a platform (11) of a first vane for mechanically coupling with an external shell (60) and delimited by:
- an internal surface (18) defining a profile of a duct for a flow of fluid through said row of stator vanes,
- an external surface (19),
- a blade (12) of the first vane delimited by a head (14) of the first vane and a root (15) of the first vane, said blade (12) being fixed on said internal surface (18) of the platform (11) of the first vane;
said platform (11) of the first vane comprising an aperture (30);
b. providing a second vane (20) comprising:
- a platform (21) of a second vane for mechanically coupling said second vane (10) with an external shell (60) and delimited by
- an internal surface (28) to come into contact with the external surface (19) of the platform (11) of the first vane,
- an external surface (29),
- a blade (22) of the second vane delimited by a head (24) of the second vane and a root (25) of the second vane, said blade (22) of the second vane being fixed on said internal surface (28) of the platform (21) of the second vane;
**characterised in that** the aperture (30) is an opening between said internal surface (18) of the platform of the first vane and said external surface (19) of the platform of the first vane;
and **in that** the method comprises the step of:
c. inserting said second vane (20) in said aperture (30) by starting with said root (25) of the second vane until abutting said internal surface (28) of the platform of the second vane on said external surface (19) of the platform of the first vane.

15. Method for assembling a row of stator vanes of a stage of a turbomachine compressor, comprising the following steps:
d. carrying out the steps of the preceding claims so as to assemble a group of stator vanes (100), said group of stator vanes (100) comprising fixing means (40) secured to said external surface (19) of the platform (11) of the first vane (10);
e. providing an external shell (60) of a compressor stage, said external shell (60) comprising a fixing hole (63);
f. fixing said group of stator vanes (100) to said external shell (60) by making said fixing means (40) pass through said fixing hole (63) then by bolting, riveting or welding said fixing means (40) to said external shell (60), such that said external surface (19) of the platform (11) of the first vane (10) and said external surface (29) of the platform (21) of the second vane (20) are in contact with said external shell (60).
